(19) Europäisches Patentamt
European Patent Office
Office européen des brevets

(11) Publication number: 0 112 580
B1

(12) **EUROPEAN PATENT SPECIFICATION**

(45) Date of publication of patent specification: 21.05.86

(51) Int. Cl.$^4$: C 07 F 9/38

(21) Application number: 83113144.6

(22) Date of filing: 27.12.83

(54) **Process for preparing phosphonomethylated amino acids.**

(30) Priority: 27.12.82 US 453661

(43) Date of publication of application:
04.07.84 Bulletin 84/27

(45) Publication of the grant of the patent:
21.05.86 Bulletin 86/21

(84) Designated Contracting States:
AT BE CH DE FR GB IT LI NL SE

(56) References cited:
FR-A-2 193 830
US-A-3 927 080
US-A-4 065 491

(73) Proprietor: STAUFFER CHEMICAL COMPANY
Westport Connecticut 06880 (US)

(72) Inventor: Nagubandi, Sreeramulu
KA-3 208 Harris Road
Bedford Hills New York 10507 (US)

(74) Representative: Jaeger, Klaus, Dr. et al
JAEGER & PARTNER Patentanwälte Bergstrasse 48 1/2
D-8035 München-Gauting (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 112 580 B1

**Description**

Field of the invention

The present invention is a process for preparing N-phosphonomethyl amino acids and, in particular, for preparing N-phosphonomethylglycine, otherwise known as glyphosate.

Background of the invention

Glyphosate and its derivatives are herbicides. Herbicides are useful for controlling or modifying plant growth. Glyphosate and its derivatives are effective in controlling or modifying growth in a wide variety of plant species, including broadleaves, grasses and sedge.

Because glyphosate and its derivatives are so useful, new processes for making it and its derivatives faster, cheaper or in greater yields are constantly in demand. A new process for preparing glyphosate and its derivatives has now been discovered.

When ammonia is reacted with a α-halogen acid, the resultant product is often a mixture of a generally desired amino acid and dicarboxyalkyl amine together with tricarboxyalkyl amine. It is postulated that the amino acid is formed first, that some of this amino acid then reacts with additional α-halogen acid to form the dicarboxy alkyl amine, and finally, that some of the dicarboxyalkyl amine reacts with more α-halogen acid to form tricarboxyalkyl amine. In case only one of these products is desired elaborate separation procedures are required.

If the desired product is the monosubstitution product, the preparation of dicarboxyalkyl amine and tricarboxyalkyl amine, respectively, can be prevented by attaching a protective group to the nitrogen of ammonia to form a less reactive ammonia derivative. The deactivating group may be the carboxyl group. The deactivating group allows the ammonia derivative to which it is attached to react once with α-halogen acid and then prevents the ammonia derivative from further reaction. As a result, no significant amounts of dicarboxyalkyl amine or tricarboxyalkyl amine are formed.

The following reaction is typical.

(1) $$2NH_3+ClCH_2CO_2H \rightarrow H_2NCH_2CO_2H+NH_4Cl$$
$$\downarrow$$
$$HN(CH_2CO_2H)_2$$
$$\downarrow$$
$$N(CH_2CO_2H)_3$$

If only the monosubstitution product is desired, the reaction can be carried out using a large excess of ammonia in the presence of carbon dioxide and/or sodium bicarbonate. In this way, the amine group reacts first with carbon dioxide to form a less reactive amino compound and then once with α-halogen acid. The reaction conditions are such that further reaction of the amine with the acid is inhibited. The deactivating group, which is $CO_2$, is removed from the deactivated amino compound by acidification. The following sequence is postulated.

(2) 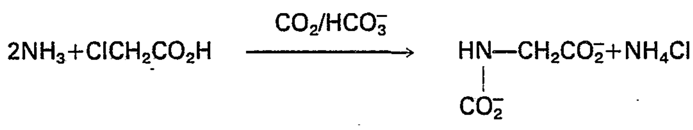


(3) 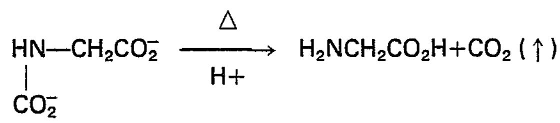


The entire reaction ((2) and (3)) may be carried out in one pot, so that

(4) $$2NH_3+ClCH_2CO_2H \xrightarrow[2.\ \Delta,\ H+]{1.\ CO_2/HCO_3^-} H_2NCH_2CO_2H+CO_2(\uparrow)+NH_4Cl$$

Description of the invention

A process for preparing N-phosphonomethyl amino acids has been discovered. According to this process an amino acid ester or salt having the formula

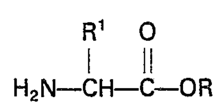

wherein R is selected from the group consisting of an alkali metal equivalent, an alkaline earth metal

equivalent, an ammonium group, an organic ammonium group, alkyl having 1 to 8 carbon atoms, phenyl and substituted phenyl wherein the substituents are selected from the group consisting of alkyl having 1 to 4 carbon atoms, alkoxy having 1 to 4 carbon atoms, and chloro, and $R^1$ is selected from the group consisting of hydrogen, a primary or secondary aliphatic alkyl having 1 to 8 carbon atoms, alkenyl having 2 to 8 carbon atoms, and alkynyl having 2 to 8 carbon atoms, wherein said alkyl, alkenyl or alkynyl are optionally substituted with a member of the group consisting of halogen, a cyano group, a carboxy group, alkoxy having 1 to 4 carbon atoms, alkyl-mercapto having 1 to 4 carbon atoms, aryloxy having 6 to 12 carbon atoms, alkoxy carbonyl having 2 to 8 carbon atoms, aryl having 6 to 12 carbon atoms, carboxyaryl having 7 to 12 carbon atoms, and alkoxyalkoxy having 2 to 8 carbon atoms is reacted with a carbonate salt, a bicarbonate salt or carbon dioxide gas to form a N-carboxylated amino acid derivative; said N-carboxylated amino acid derivative is reacted with formaldehyde and a phosphorus compound having the formula

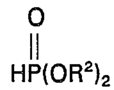 or $P(OR^2)_3$

wherein $R^2$ is selected independently each time it occurs from the group consisting of alkyl having 1 to 8 carbon atoms, phenyl and substituted phenyl wherein the substituents are selected from the group consisting of alkyl having 1 to 4 carbon atoms, alkoxy having 1 to 4 carbon atoms, and halogen to obtain a N-carboxy-N-phosphonomethyl amino acid derivative, and said N-carboxy-N-phosphonomethyl amino acid derivative is acidified to cleave the N-bonded carboxylic group from said amino acid derivative.

One example for an aryl radical in $R^1$ of the above formula of the amino acid ester or salt is the phenyl radical.

Also a similar process for the preparation of N-phosphonomethyl glycine has been discovered. Said compound is prepared by reacting glycine with sodium bicarbonate or sodium carbonate to form N-carboxylated glycine, reacting said glycine derivative using formaldehyde and a phosphorus compound having the formula

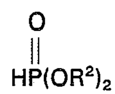 or $P(OR^2)_3$

wherein $R^2$ is selected independently each time it occurs from the group consisting of an alkyl having 1 to 8 carbon atoms, phenyl and substituted phenyl wherein the substituents are selected from the group consisting of alkyl having 1 to 4 carbon atoms, alkoxy having 1 to 4 carbon atoms, and halogen to obtain a N-carboxy-N-phosphonomethyl glycine derivative, acidifying said N-carboxy-N-phosphonomethyl glycine derivative to cleave said carboxylic protecting group and form a N-phosphonomethyl glycine derivative, heating said N-phosphonomethyl glycine derivative in the presence of acid to hydrolyze any ester group.

The following sequence is exemplary:

(5) 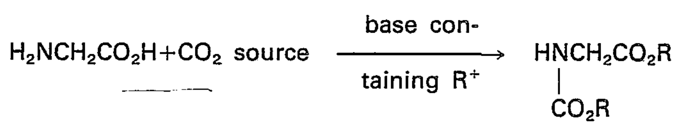


Alternative embodiment:

(5a) 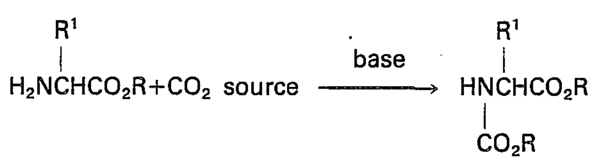


(6) 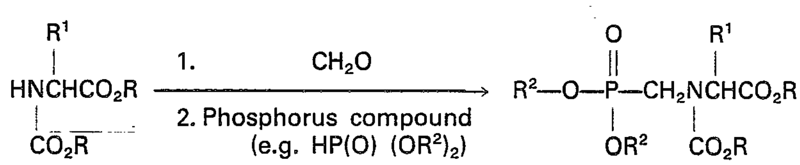


(7) 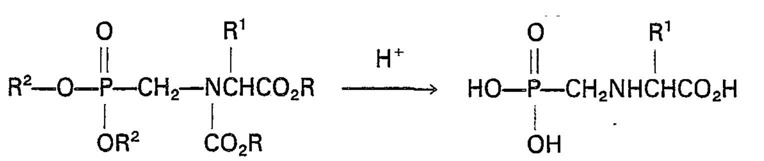

In each of reactions (5) and (5a), the $CO_2$ providing agent is selected from the group consisting of a carbonate salt, a bicarbonate salt or carbon dioxide gas. In reaction (5), the base is, for example, sodium hydroxide or barium hydroxide.

The amino acid is converted to a salt or an ester before it is reacted with the carboxylating agent. The salt may be made by using an excess of the carboxylating agent if this agent is appropriate for forming a salt or by using a separate base, such as sodium hydroxide or barium hydroxide. The ester may be prepared by dissolving the acid in an alcohol, such as ethanol, and heating it in the presence of anhydrous hydrochloric acid.

An example of a suitable ester is glycine ethyl ester (R is ethyl and $R^1$ is hydrogen), which is commercially available as glycine ethyl ester hydrochloride.

The reaction of the amino acid salt or the amino acid ester and the carboxylating agent is carried out in a suitable solvent. Suitable solvents include water or organic solvents. Examples of suitable organic solvents include dimethylsulfoxide or alcohols, such as methanol or ethanol.

In a preferred embodiment, the carboxylating agent is sodium bicarbonate, sodium carbonate or carbon dioxide gas.

To form the carboxylated amino acid derivative, the mole ratio of amino acid derivative to carboxylating agent should be at least 1 to 1, i.e., for every mole of amino acid derivative which is used, at least one mole of carboxylating agent should be used. However, a two or three times excess of the carboxylating agent, i.e., two or three moles of carboxylating agent for every mole of amino acid derivative, may be beneficial to drive the reaction to completion.

When the carboxylating agent is sodium bicarbonate or sodium carbonate, the amino acid may be converted to a salt and the salt reacted with the carboxylating agent in one step. This is accomplished by using at least a two times and up to about a five times excess of sodium bicarbonate, i.e., at least two moles and up to about five moles of sodium bicarbonate for every mole of amino acid. In this way, one mole of the sodium bicarbonate may be used to convert the acid to a salt and the remainder may be reacted with the amino acid salt to form a carboxylated amino acid derivative. Alternatively, at least one mole and up to about five moles of sodium carbonate may be used for every mole of amino acid. Greater amounts of sodium bicarbonate or sodium carbonate are undesirable for economic reasons.

The amino acid and sodium bicarbonate or sodium carbonate may be combined in a reaction flask at room temperature or below with stirring. If the carboxylating agent is present in greater concentrations than the amino acid, heating to a temperature less than 100°C may be required to dissolve the excess salt.

If the carboxylating agent is gaseous, the reaction conditions are similar, i.e., room temperature or below with stirring, but the gas may be bubbled through the reaction mixture at one atmosphere pressure or higher. In this case it is desirable to form the amino acid salt prior to bubbling the gas through the mixture. This is done by adding a base, such as sodium hydroxide or barium hydroxide, to the amino acid.

As an alternative means of converting the amino acid to a salt and converting the salt to a carboxylated amino compound, sodium bicarbonate is used followed by carbon dioxide gas. This method can insure that the reaction goes to completion.

Once the carboxylated amino compound is formed, it may be isolated. The carboxylated amino compound may be converted to the N-carboxy-N-phosphonomethylamino acid derivative in basic media. This reaction may be carried out by adding formaldehyde and the phosphorus compound to the carboxylated amino compound to form the N-carboxyl-N-phosphonomethyl amino acid derivative.

Additionally, the reaction with the phosphorus compound may be carried out either with or without a carbon dioxide atmosphere. If a carbon dioxide atmosphere is used, the pressure can range from 1 to 50 atmospheres, and is preferably in the range of 1 to 5 atmospheres.

The formaldehyde may be used in the form of aqueous formaldehyde or solid paraformaldehyde. If solid paraformaldehyde is used water can be used as a solvent. The mole ratio of formaldehyde to carboxylated amino compound should be at least 1:1. Excess amounts of formaldehyde, up to a 3:1 mole ratio, can be employed. Mole ratios of greater than 3:1 are not desirable for economic reasons.

The formaldehyde may be slowly added to the carboxylated amino acid derivative at temperatures in the range of 1°C to 30°C. The reaction mixture may exotherm by a temperature of 1 to 5°C.

Water may be added to dissolve the carboxylated amino derivative and/or to facilitate stirring. The carboxylated amino derivative will form a solution having a pH of about 9 or 10 when dissolved in water. The water may be added either before or after the addition of formaldehyde.

In an alternative embodiment, the carboxylated amino compound is suspended in an organic solvent, such as methanol. If this is done, it may be necessary to make the reaction mixture basic with a suitable base before adding formaldehyde to the carboxylated amino compound. Suitable bases include sodium hydroxide, sodium methoxide and sodium ethoxide.

After the formaldehyde is added, the reaction mixture may be stirred for about a half hour or more at room temperature or at a temperature up to 50—60°C. In a preferred embodiment the reaction mixture is stirred at room temperature for one hour.

The mole ratio of phosphorus compound to carboxylated amino compound should also be at least 1:1 and can range up to about 2:1. Greater amounts of the phosphorus compound relative to the carboxylated amino acid derivative are not economically desirable. The phosphorus compound is added to the flask

containing the carboxylated amino compound and formaldehyde. This reaction mixture is heated to reflux at about 95°C for at least 2 to 3 hours. The refluxing may be carried out under carbon dioxide atmosphere.

In an alternative embodiment, the formaldehyde is reacted in basic media and the phosphorus compound is reacted in acidic media. This embodiment can be used when the ratio of formaldehyde to carboxylated amino acid derivative is 1:1 and the reaction goes to completion. Acidification of the reaction mixture will cleave the carboxylating agent prior to reacting with the phosphorus source compound.

Any acid may be used to acidify the reaction mixture before adding the phosphorus compound. Such acids include hydrochloric acid, hydrobromic acid, sulfuric acid, acetic acid, nitric acid and perchloric acid. Following the acidification, the phosphorus compound may be added as described.

If the conversion of the carboxylated amino compound to the N-carboxy-N-phosphonomethyl amino acid derivative has been carried out entirely in basic media, the reaction mixture containing the N-carboxy-N-phosphonomethyl amino acid derivative is acidified to remove the carboxyl group. Any acid may be used for this purpose. Such acids include hydrochloric acid, hydrobromic acid, sulfuric acid, acetic acid, nitric acid and perchloric acid.

It may be necessary to remove other groups in addition to the carboxyl group, depending on the particular phosphorus compound and amino acid derivative used. If alkyl groups must be removed in addition to the carboxyl group, strong acids, such as the first two listed, should be used and the reaction mixture is heated to reflux for at least 3 to 10 hours. If phenyl groups must be removed, this is done in the presence of an acid as described above or a base, such as sodium hydroxide.

The resulting product is a N-phosphonomethyl amino acid. The following Examples show a practical application of the process described. The final product obtained in each Example is glyphosate. ($R^1$ is hydrogen in equations (5a), (6) and (7)).

Example 1

To a solution of glycine (37.5 g, 0.5 mole) in water (200 ml), anhydrous sodium carbonate (53 g, 0.5 mole) in water (200 ml) was added and the reaction was stirred at room temperature. After 0.5 hour, a small amount of insoluble particles were filtered and methanol (2.0 l) was added. The resulting disodium glycine carbamate ($NaO_2CNHCH_2CO_2Na$) was filtered and washed with ether (50 ml). The moist solid was dried under vacuum at 60—70°C for 3 hours to obtain 64 g (77%) of anhydrous white solid (disodium glycine carbamate).

To a solution of disodium glycine carbamate (13.6 g, 0.083 mole) in water (50 ml), 37% aqueous formaldehyde (10.1 ml, 3.74 g, 0.125 mole) was added. The reaction was slightly exothermic. After stirring the reaction mixture, for 0.5 hour, at room temperature, diethyl phosphite (16.98 g, 0.123 mole) was added. The reaction mixture was heated to 95°C for 2 hours. After cooling the reaction mixture, ethanol (100 ml) was added and the solvent was removed under vacuum. The resulting oil was acidified to pH 2 with concentrated hydrochloric acid. Sodium chloride was filtered off. The remaining reaction mixture contained 16.4 g of diethylphosphonomethyl glycine.

Diethylphosphonomethyl glycine (6 g) was refluxed, for 16 hours, with concentrated hydrochloric acid (20 ml). The reaction mixture was cooled and the solvent was evaporated to obtain glyphosate (36%), which was confirmed by high pressure liquid chromatograph and $^{31}P$-nuclear magnetic resonance and infrared spectra.

Example 2

To a solution of barium hydroxide (160 g, 0.93 mole) in water (3.5 l), a solution of glycine (37.5 g, 0.5 mole) in water (200 ml) was added. After adding phenolphthalein (several drops), carbon dioxide gas was bubbled into the reaction mixture, at a constant rate, until the pink color of the indicator disappeared. The reaction mixture was cooled and filtered to obtain 105 g (84%) glycine carbamate barium salt ($Ba^{++-}O_2CNHCH_2CO_2^-$).

The balance of this Example has not been carried out with the glycine carbamate barium salt prepared above, but it is expected that it would work as described.

Disodium glycine carbamate is suspended in anhydrous ethanol and the pH is adjusted to 9 with sodium ethoxide. Paraformaldehyde (1.1 mole) is added. Triethyl phosphite (1.1 mole) is added and the reaction mixture is heated at reflux for about 3 hours. The solvent is evaporated and the resulting crude mixture is acidified using concentrated hydrochloric acid, to obtain diethylphosphonomethyl glycine which is later hydrolyzed, as described in Example 1, to glyphosate.

**Claims**

1. A process for preparing N-phosphonomethyl-amino acids characterized by: reacting an amino acid ester or salt having the formula

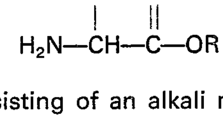

wherein R is selected from the group consisting of an alkali metal equivalent, an alkaline earth metal

equivalent, an ammonium group, an organic ammonium group, alkyl having 1 to 8 carbon atoms, phenyl and substituted phenyl wherein the substituents are selected from the group consisting of alkyl having 1 to 4 carbon atoms, alkoxy having 1 to 4 carbon atoms, and chloro, and $R^1$ is selected from the group consisting of hydrogen, a primary or secondary aliphatic alkyl having 1 to 8 carbon atoms, alkenyl having 2 to 8 carbon atoms, and alkynyl having 2 to 8 carbon atoms, wherein said alkyl, alkenyl or alkynyl are optionally substituted with a member of the group consisting of halogen, a cyano group, a carboxy group, alkoxy having 1 to 4 carbon atoms, alkyl-mercapto having 1 to 4 carbon atoms, aryloxy having 6 to 12 carbon atoms, alkoxy carbonyl having 2 to 8 carbon atoms, aryl having 6 to 12 carbon atoms, carboxyaryl having 7 to 12 carbon atoms, and alkoxyalkoxy having 2 to 8 carbon atoms with a carbonate salt, a bicarbonate salt or carbon dioxide gas to form a N-carboxylated amino acid derivative, reacting said N-carboxylated amino acid derivative with formaldehyde and a phosphorus compound having the formula

$$HP(=O)(OR^2)_2 \quad \text{or} \quad P(OR^2)_3$$

wherein $R^2$ is selected independently each time it occurs from the group consisting of alkyl having 1 to 8 carbon atoms, phenyl and substituted phenyl wherein the substituents are selected from the group consisting of alkyl having 1 to 4 carbon atoms, alkoxy having 1 to 4 carbon atoms, and halogen to obtain a N-carboxy-N-phosphonomethyl amino acid derivative, and acidifying said N-carboxy-N-phosphonomethyl amino acid derivative to cleave the N-bonded carboxylic group from said amino acid derivative.

2. A process as defined in claim 2 wherein $R^1$ of the amino acid ester or salt is hydrogen.

3. A process as defined in claim 1 wherein said carboxylating agent is sodium bicarbonate, sodium carbonate or carbon dioxide gas.

4. A process as defined in claim 3 wherein said amino acid ester or salt is reacted with one mole equivalent of said carboxylating agent.

5. A process as defined in claim 1 wherein said formaldehyde is used in the form of aqueous formaldehyde.

6. A process as defined in claim 1 wherein said N-carboxylated amino acid derivative is reacted with formaldehyde and the said phosphorus compound in basic media.

7. A process as defined in claim 6 wherein said reaction of N-carboxylated amino acid derivative and formaldehyde and the said phosphorus compound is carried out under carbon dioxide at pressure in the range of 1 to 5 atmospheres.

8. A process as defined in claim 1 wherein said N-carboxylated amino acid derivative is reacted with formaldehyde and the said phosphorus compound using formaldehyde in basic media and the said phosphorus compound in acidic media.

9. A process as defined in claim 1 wherein said N-carboxy-N-phosphonomethyl amino acid derivative is acidified with hydrochloric acid, hydrobromic acid, sulfuric acid, acetic acid, nitric acid or perchloric acid.

10. A process as defined in claim 1 wherein acidification of said N-carboxy-N-phosphonomethyl amino acid derivative yields a N-phosphonomethyl amion acid derivative and said derivative is hydrolyzed to a N-phosphonomethyl amino acid by heating in acid.

11. A process for preparing N-phosphonomethyl glycine characterized by: reacting glycine with sodium bicarbonate or sodium carbonate to form N-carboxylated glycine, reacting said glycine derivative using formaldehyde and a phosphorus compound having the formula

$$HP(=O)(OR^2)_2 \quad \text{or} \quad P(OR^2)_3$$

wherein $R^2$ is selected independently each time it occurs from the group consisting of an alkyl having 1 to 8 carbon atoms, phenyl and substituted phenyl wherein the substituents are selected from the group consisting of alkyl having 1 to 4 carbon atoms, alkoxy having 1 to 4 carbon atoms, and halogen to obtain a N-carboxy-N-phosphonomethyl glycine derivative, acidifying said N-carboxy-N-phosphonomethyl glycine derivative to cleave said carboxylic protecting group and form a N-phosphonomethyl glycine derivative, heating said N-phosphonomethyl glycine derivative in the presence of acid to hydrolyze any ester group.

12. A process as defined in claim 11 wherein said N-carboxylated glycine derivative is reacted with formaldehyde and the said phosphorus compound in basic media.

13. A process as defined in claim 11 wherein said N-carboxylated amino acid derivative is reacted with formaldehyde and the said phosphorus compound using formaldehyde in basic media and the phosphorus compound in acidic media.

14. A process as defined in claim 11 wherein said N-carboxy-N-phosphonomethyl amino acid derivative is acidified with hydrobromic acid, sulfuric acid, acetic acid, nitric acid or perchloric acid.

**Patentansprüche**

1. Verfahren zur Herstellung von N-Phosphonomethyl-aminosäuren gekennzeichnet durch Umsetzung eines Aminosäureesters oder Aminosäuresalzes mit der Formel

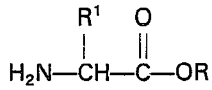

in der R ein Alkalimetalläquivalent, ein Erdalkalimetalläquivalent, eine Ammoniumgruppe, eine organische Ammoniumgruppe, Alkyl mit 1 bis 8 Kohlenstoffatomen, Phenyl oder substituiertes Phenyl ist, wobei die Substituenten des Phenylringes Alkyl mit 1 bis 4 Kohlenstoffatomen, Alkoxy mit 1 bis 4 Kohlenstoffatomen oder Chlor sein können, und in der $R^1$ Wasserstoff, primäres oder sekundäres aliphatisches Alkyl mit 1 bis 8 Kohlenstoffatomen, Alkenyl mit 2 bis 8 Kohlenstoffatomen oder Alkynyl mit 2 bis 8 Kohlenstoffatomen ist, wobei Alkyl, Alkenyl oder Alkynyl durch Halogen, Cyano, Carboxy, Alkoxy mit 1 bis 4 Kohlenstoffatomen, Alkylmercapto mit 1 bis 4 Kohlenstoffatomen, Aryloxy mit 6 bis 12 Kohlenstoffatomen, Alkoxycarbonyl mit 2 bis 8 Kohlenstoffatomen, Aryl mit 6 bis 12 Kohlenstoffatomen, Carboxyaryl mit 7 bis 12 Kohlenstoffatomen oder Alkoxyalkoxy mit 2 bis 8 Kohlenstoffatomen substituiert sein können, mit einem Carbonat, Hydrogencarbonat oder gasförmigem Kohlendioxid unter Bildung eines N-carboxylierten Aminosäurederivates; Umsetzung des N-carboxylierten Aminosäurederivates mit Formaldehyd und einer Phosphorverbindung mit der Formel

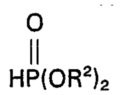 oder $P(OR^2)_3$

in der die Reste $R^2$ unabhängig voneinander Alkyl mit 1 bis 8 Kohlenstoffatomen, Phenyl oder substituiertes Phenyl sind, wobei die Substituenten des Phenylringes Alkyl mit 1 bis 4 Kohlenstoffatomen, Alkoxy mit 1 bis 4 Kohlenstoffatomen oder Halogen sein können, so daß ein N-Carboxy-N-phosphonomethylaminosäurederivat erhalten wird; und Ansäuern des N-Carboxy-N-phosphonomethylaminosäurederivates, um die Carboxylgruppe vom Stickstoffatom des Aminosäurederivates abzuspalten.

2. Verfahren nach Anspruch 2, dadurch gekennzeichnet, daß $R^1$ des Aminosäureesters oder des Aminosäuresalzes Wasserstoff ist.

3. Verfahren nach Anspruch 1, dadurch gekennzeichnet, daß das carboxylierende Agens Natriumhydrogencarbonat, Natriumcarbonat oder gasförmiges Kohlendioxid ist.

4. Verfahren nach Anspruch 3, dadurch gekennzeichnet, daß der Aminosäureester oder das Aminosäuresalz mit einem Moläquivalent des carboxylierenden Agens umgesetzt wird.

5. Verfahren nach Anspruch 1, dadurch gekennzeichnet, daß Formaldehyd als wässrige Formalinlösung verwendet wird.

6. Verfahren nach Anspruch 1, dadurch gekennzeichnet, daß das N-carboxylierte Aminosäurederivat mit Formaldehyd und der Phosphorverbindung in basischem Reaktionsmedium zur Reaktion gebracht wird.

7. Verfahren nach Anspruch 6, dadurch gekennzeichnet, daß das N-carboxylierte Aminosäurederivat mit Formaldehyd und der Phosphorverbindung unter Kohlendioxid bei einem Druck im Bereich von 1 bis 5 Atmosphären umgesetzt wird.

8. Verfahren nach Anspruch 1, dadurch gekennzeichnet, daß das N-carboxylierte Aminosäurederivat mit Formaldehyd und der Phosphorverbindung umgesetzt wird, wobei Formaldehyd in basischem Reaktionsmedium und die Phosphorverbindung in saurem Reaktionsmedium zur Anwendung kommt.

9. Verfahren nach Anspruch 1, dadurch gekennzeichnet, daß das N-Carboxy-N-phosphonomethylaminosäurederivat mit Salzsäure, Bromwasserstoffsäure, Schwefelsäure, Essigsäure, Salpetersäure oder Perchlorsäure angesäuert wird.

10. Verfahren nach Anspruch 1, dadurch gekennzeichnet, daß nach Ansäuern des N-Carboxy-N-phosphonomethylaminosäurederivates ein N-Phosphonomethylaminosäurederivat erhalten wird und dieses Derivat durch Erhitzen in Säure zu einer N-Phosphonomethylaminosäure hydrolisiert wird.

11. Verfahren zur Herstellung von N-Phosphonomethylglycin gekennzeichnet durch Umsetzung von Glycin mit Natriumhydrogencarbonat oder Natriumcarbonat unter Bildung von N-carboxyliertem Glycin; Umsetzung dieses Glycinderivates mit Formaldehyd und einer Phosphorverbindung mit der Formel

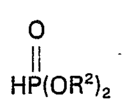 oder $P(OR^2)_3$

in der die Reste $R^2$ unabhängig voneinander Alkyl mit 1 bis 8 Kohlenstoffatomen, Phenyl oder substituiertes Phenyl sind, wobei die Substituenten des Phenylringes Alkyl mit 1 bis 4 Kohlenstoffatomen, Alkoxy mit 1 bis 4 Kohlenstoffatomen oder Halogen sein können, wodurch ein N-Carboxy-N-phosphonomethylglycinderivat erhalten wird; Ansäuern des N-Carboxy-N-phosphonomethylglycinderivates, um die Carboxylschutzgruppe unter Bildung eines N-Phosphonomethylglycinderivates abzuspalten; Erhitzen des N-Phosphonomethylglycinderivates in Gegenwart von Säure, um vorhandene Estergruppen zu hydrolisieren.

12. Verfahren nach Anspruch 11, dadurch gekennzeichnet, daß das N-carboxylierte Glycinderivat mit Formaldehyd und der Phosphorverbindung in basischem Medium umgesetzt wird.

13. Verfahren nach Anspruch 11, dadurch gekennzeichnet, daß das N-carboxylierte Aminosäurederivat mit Formaldehyd und der Phosphorverbindung umgesetzt wird, wobei Formaldehyd in basischem Reaktionsmedium und die Phosphorverbindung in saurem Reaktionsmedium zur Anwendung kommt.

14. Verfahren nach Anspruch 11, dadurch gekennzeichnet, daß das N-Carboxy-N-phosphonomethylaminosäurederivat mit Bromwasserstoffsäure, Schwefelsäure, Essigsäure, Salpetersäure oder Perchlorsäure angesäuert wird.

**Revendications**

1. Un procédé de préparation d'amino-acides N-phosphonométhylés, caractérisé en ce que l'on fait réagir un ester ou un sel d'amino-acide dont la formule est:

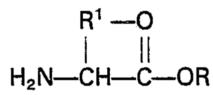

dans laquelle:

R est choisi dans le groupe constitué par un équivalent de métal alcalin, un équivalent de métal alcalino-terreux, un groupe ammonium, un groupe ammonium organique, un radical alkyle possédant de 1 à 8 atomes de carbone, un radical phényle et phényle substitué dans lequel les substituants sont choisis dans le groupe constitué par un radical alkyle possédant de 1 à 4 atomes de carbone, un radical alkoxy possédant de 1 à 4 atomes de carbone et un atome de chlore; et

$R^1$ est choisi dans le groupe constitué par un atome d'hydrogène, un radical alkyle aliphatique primaire ou secondaire possédant de 1 à 8 atomes de carbone, un radical alkényle possédant de 2 à 8 atomes de carbone et un radical alkynyle possédant de 2 à 8 atomes de carbone, dans lequel ces radicaux alkyle, alkényle ou alkynyle sont éventuellement substitués par un élément du groupe constitué par un atome d'halogène, un groupe cyano, un groupe carboxy, un groupe alkoxy possédant de 1 à 4 atomes de carbone, un groupe alkyl-mercapto possédant de 1 à 4 atomes de carbone, un radical aryloxy possédant de 6 à 12 atomes de carbone, un radical alkoxy-carbonyle possédant de 2 à 8 atomes de carbone, un radical aryle possédant de 6 à 12 atomes de carbone, un radical carboxy-aryle possédant de 7 à 12 atomes de carbone et un radical alkoxy-alkoxy possédant de 2 à 8 atomes de carbone, avec un carbonate, un bicarbonate ou du dioxyde de carbone gazeux pour former un dérivé d'amino-acide N-carboxylé, on fait réagir ce dérivé d'amino-acide N-carboxylé avec du formaldéhyde et un dérivé du phosphore dont la formule est:

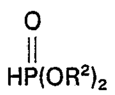 ou $P(OR^2)_2$

dans laquelle:

$R^2$ est choisi, indépendamment chaque fois qu'il apparaît, à partir du groupe constitué d'un radical alkyle possédant de 1 à 8 atomes de carbone, un radical phényle et phényle substitué dans lequel les substituants sont choisis dans le groupe constitué par un radical alkyle possédant de 1 à 4 atomes de carbone, un radical alkoxy possédant de 1 à 4 atomes de carbone et une atome d'halogène, pour obtenir un dérivé d'amino-acide N-carboxy-N-phosphonométhylé, et on acidifie ce dérivé d'amino-acide N-carboxy-N-phosphonométhylé pour séparer le groupe carboxylique lié à l'atome de N de ce dérivé d'aminoacide.

2. Un procédé selon la revendication 1, dans lequel le $R^1$ de l'ester ou du sel d'amino-acide est l'hydrogène.

3. Un procédé selon la revendication 1, dans lequel cet agent de carboxylation est le bicarbonate de sodium, le carbonate de sodium ou le dioxyde de carbone gazeux.

4. Un procédé selon la revendication 3, dans lequel cet ester ou ce sel d'amino-acide est mis en réaction avec un équivalent molaire de cet agent de carboxylation.

5. Un procédé selon la revendication 1, dans lequel on utilise ce formaldéhyde sous la forme de formaldéhyde aqueux.

6. Un procédé selon la revendication 1, dans lequel on fait réagir ce dérivé d'amino-acide N-carboxylé avec du formaldéhyde et ce dérivé du phosphore dans des milieux basiques.

7. Un procédé selon la revendication 6, dans lequel on met en oeuvre cette réaction du dérivé d'amino-acide N-carboxylé et du formaldéhyde et de ce dérivé du phosphore sous atmosphère de dioxyde de carbone à des pressions comprises entre 1 et 5 atmosphères.

8. Un procédé selon la revendication 1, dans lequel on fait réagir ce dérivé d'amino-acide N-carboxylé avec du formaldéhyde et ce dérivé du phosphore en utilisant du formaldéhyde dans des milieux basiques et ce dérivé du phosphore dans des milieux acides.

9. Un procédé selon la revendication 1, dans lequel on acidifie ce dérivé d'amino-acide N-carboxy-N-phosphonométhylé avec de l'acide chlorhydrique, de l'acide bromhydrique, de l'acide sulfurique, de l'acide acétique, de l'acide nitrique ou de l'acide perchlorique.

10. Un procédé selon la revendication 1, dans lequel l'acidification de ce dérivé d'amino-acide N-carboxy-N-phosphonométhylé donne un dérivé d'amino-acide N-phosphonométhylé et l'on hydrolyse ce dérivé en amino-acide N-phosphonométhylé par chauffage dans un acide.

11. Un procédé de préparation de N-phosphonométhylglycine, caractérisé en ce que l'on fait réagir la glycine avec le bicarbonate de sodium ou le carbonate de sodium pour former la glycine N-carboxylée; on fait réagir ce dérivé de glycine en utilisant du formaldéhyde et un dérivé du phosphore dont la formule est:

$$\overset{O}{\overset{\|}{HP}}(OR^2)_2 \quad \text{ou} \quad P(OR^2)_2$$

dans laquelle:

$R^2$ est choisi, indépendamment chaque fois qu'il apparaît, à partir du groupe constitué d'un radical alkyle possédant de 1 à 8 atomes de carbone, un radical phényle et phényle substitué dans lequel les substituants sont choisis parmi le groupe constitué d'un radical alkyle possédant de 1 à 4 atomes de carbone, alkoxy possédant de 1 à 4 atomes de carbone et un atome d'halogène, pour obtenir un dérivé de N-carboxy-N-phosphonométhylglycine, on acidifie ce dérivé de N-carboxy-N-phosphonométhylglycine pour séparer ce groupe carboxylique protecteur et former un dérivé de N-phosphonométhylglycine, on chauffe ce dérivé de N-phosphonométhylglycine en présence d'un acide pour hydrolyser tout groupe ester.

12. Un procédé selon la revendication 11, dans lequel on fait réagir ce dérivé de glycine N-carboxylée avec le formaldéhyde et ce dérivé du phosphore dans des milieux basiques.

13. Un procédé selon la revendication 11, dans lequel on fait réagir ce dérivé d'amino-acide N-carboxylé avec le formaldéhyde et ce dérivé du phosphore en utilisant du formaldéhyde dans des milieux basiques et le dérivé du phosphore dans des milieux acides.

14. Un procédé selon la revendication 11, dans lequel on acidifie ce dérivé d'amino-acide N-carboxy-N-phosphonométhylé avec de l'acide bromhydrique, de l'acide sulfurique, de l'acide acétique, de l'acide nitrique ou de l'acide perchlorique.